# EUROPÄISCHE PATENTSCHRIFT

(11) **EP 1 081 843 B1**
(45) Veröffentlichungstag und Bekanntmachung des Hinweises auf die Patenterteilung: **30.01.2008**
(21) Anmeldenummer: 00115508.4
(22) Anmeldetag: 19.07.2000
(51) Int. Cl.: H02P 6/18, H02P 8/42

(54) **Verfahren zum Betrieb von Brushless DC-Motoren bei kleinen Drehzahlen**
Method for operating a brushless DC-motor at low speed
Procédé pour faire fonctionner un moteur à courant continu sans balais

(30) Priorität: 06.09.1999 DE 19942493
(43) Veröffentlichungstag der Anmeldung: 07.03.2001
(73) Patentinhaber: WILO AG, 44263 Dortmund (DE)
(72) Erfinder: Stephan, Waldemar, 44319 Dortmund (DE)
(74) Vertreter: COHAUSZ DAWIDOWICZ HANNIG & SOZIEN

(56) Entgegenhaltungen:
- EP-A- 0 664 603
- EP-A- 0 822 651
- DE-A- 4 316 292
- US-A- 4 603 283
- US-A- 5 017 845

## Beschreibung

Die vorliegende Erfindung betrifft ein Verfahren zum Betrieb eines elektronischen kommutierten Gleichstrommotors zum Antrieb einer Kreiselpumpe, der einen Stator mit mindestens einer Wicklung und der einen permanentmagnetischen Rotor aufweist.

Derartige sogenannte bürstenlosen ("brushless") Gleichstrom ("DC")-Motoren gewinnen parallel mit der Entwicklung billiger und zuverlässiger Leistungshalbleiterelemente an Bedeutung. Bei diesen Motoren erfolgt die Kommutierung der Spannung nicht wie bislang durch Bürstenkontakte sondern über das gezielte Schalten von Leistungshalbleitern. Damit der Mikroprozessor die Schaltvorgänge exakt koordinieren kann, braucht er die Information über die aktuelle Ausrichtung des Rotors. Bekanntermaßen wird zu diesem Zweck die Lage der im Rotor befindlichen Magnete entweder mittels Hall-Sensoren oder über die von den Magneten erzeugte rückinduzierte Spannung in den Statorwicklungen gemessen, wobei durch die Messung dieser "back-EMF" (BEMF) die Kosten gegenüber der Verwendung der Hall-Sensoren erheblich verringert werden.

Derartige brushless DC-Motoren werden neben vielen anderen Einsatzgebieten in jüngerer Zeit auch zum Antrieb von Kreiselpumpen unterschiedlicher Bauarten verwendet.

Problematisch bei den Motoren, die mit Messung der BEMF arbeiten, ist, daß die Messung bei geringen Geschwindigkeiten des Motors wegen der sehr kleinen rückinduzierten Signale versagt. Aus diesem Grunde oder wegen vorhandener Rastmomente bleiben derartige brushless DC-Motoren unterhalb einer minimalen Drehzahl stehen und können mit kleineren Drehzahlen nicht betrieben werden. Dieses Problem macht den Einsatz derartiger Motoren gerade bei den genannten Kreiselpumpen, die beispielsweise in Heiz- oder Kühlkreisläufen eingesetzt werden und dort einen großen dynamischen Leistungsbereich abdecken müssen, sehr fraglich.

Aufgabe der vorliegenden Erfindung ist es daher, ein Verfahren zum Betrieb von brushless DC-Motoren zum Antrieb von Kreiselpumpen zu schaffen, das es unter Verzicht von Hall-Sensoren auf einfache und kostengünstige Weise ermöglicht, die Pumpe auch in sehr kleinen Leistungsbereichen mit geringen Fördermengen kontrolliert zu betreiben.

Diese Aufgabe wird mit einem Verfahren nach Anspruch 1 gelöst.

Mit dem erfindungsgemäßen Verfahren ist es möglich, einen brushless DC-Motor wie einen Schrittmotor jedoch mit wesentlich weniger Aufwand im kontrollierten Schrittbetrieb anzutreiben. Im erfindungsgemäßen Schrittbetrieb wird der Rotor von einem Polschenkel zum nächsten beschleunigt und vor der Kommutierung durch auslaufenlassen oder in einer besonderen Ausführungsform durch ein magnetisches Feld wieder abgebremst. Das kontrollierte Abbremsen durch das magnetische Feld hat den Vorteil, daß der Rotor in eine definierte Position kommt, von der der nächste Schritt erfolgen kann.

Diese erfindungsgemäße Antriebsart ist besonders für den Antrieb von Kreiselpumpen geeignet, da mit jedem einzelnen Schritt eine kleine Menge des Pumpmediums gefördert wird. Dabei werden die Förderpulse in dem hydraulischen System nach einer gewissen Strecke zu einem relativ gleichmäßigen Fluß mit geringer Fließgeschwindigkeit gemittelt. Mit dem erfindungsgemäßen Verfahren ist es möglich, Pumpen mit einer Förderleistung von weniger als 10 Litern pro Stunde zu betreiben. Im Gegensatz zu Schrittmotoren sind die im Schrittbetrieb angesteuerten brushless DC-Motoren wesentlich weniger aufwendig in der Konstruktion. Ein großer Vorteil ist außerdem, daß die brushless DC-Motoren aus dem Schrittbetrieb kontinuierlich in den normalen Betrieb übergehen können und dabei wesentlich höhere Drehzahlen als Schrittmotoren erreichen.

Beim Betrieb der Pumpen ist es sogar möglich und in bestimmten Anwendungen vorteilhaft, den Rotor vor der nächsten Kommutierung des Statorfeldes bis zum Stillstand abzubremen. Auf diese Weise kann der dynamische Bereich der Kreiselpumpe von nahezu Null bis zur maximalen Fördermenge ausgenutzt werden.

Der erfindungsgemäße Schrittbetrieb wird vorteilhafterweise durch das Anlegen einer Folge insbesondere sich zeitlich nicht überschneidender Treiberpulse an die Wicklung(en) erzeugt. Die Frequenz der Pulse wird dabei entsprechend der gewünschten Fördermenge vorgegeben. Die Spannung wird so eingestellt, das die zu erwartenden Belastung der Pumpe sicher überwunden wird. Es ist besonders vorteilhaft, die Treiberpulse ungefähr rechteckig auszubilden, da solche Pulse einfach zu erzeugen sind und eine nahezu linear ansteigende und damit leicht kontrollierbare rückinduzierte Spannung in erzeugen.

Es ist vorteilhaft, zur Kontrolle des Schrittbetriebes die durch die einzelnen Pulse erzeugte BEMF zu messen, um zu beobachten, ob der Rotor dem Statorfeld folgt oder ob eine Blockierung des Rotors vorliegt. Für diese Messung gibt es eine zu bevorzugende Methode. Dabei wird der insbesondere rechteckige Treiberpuls für ein kurzes Meßintervall abgeschaltet, so daß sich der Treiberpuls eigentlich aus zwei in kurzem Abstand aufeinanderfolgenden Rechteckpulsen zusammensetzt. Die Länge des Meßintervalls ist so gewählt, daß eine Messung der BEMF in einer Wicklung möglich wird. Insbesondere ist Länge des Meßintervalles kleiner als ungefähr ¼ der Pulsdauer.

Diese Methode wird vorteilhafterweise eingesetzt, wenn der Rotor während der Bewegung eine Geschwindigkeitsänderung erreicht, die eine von der Elektronik meßbare BEMF erzeugt. Wenn keine BEMF meßbar ist, ist eine Blockade des Rotors anzunehmen und die Spannung des nächsten Treiberpulses wird erhöht. Die Messung der BEMF kann einerseits innerhalb des Meßintervalls oder andererseits nach dem Ende des Pulses im spannungslosen Intervall zwischen zwei Treiberpulsen gemessen werden. Um keine störenden Signale zu erhalten ist es grundsätzlich vorteilhaft, die BEMF zu einem Zeitpunkt zu messen zu dem keine der Wicklungen bestromt ist.

Das erfindungsgemäße Verfahren zeichnet sich durch eine hohe Zuverlässigkeit im Betrieb aus. Es läßt sich mit den ohnehin in der Regelelektronik des Motors vorhandenen Komponenten bewerkstelligen und trägt somit zu einer Kostenreduzierung bei der Herstellung des Motors bei. Ein besonderer Vorteil ist, daß es sich flexibel bei vielen verschiedenen Motortypen einsetzen läßt.

Es ist vorteilhaft, einen vom normalen Schrittbetrieb losgelösten Testmodus vorzusehen, in dem über die Messung der BEMF eine mögliche Blockierung des Rotors diagnostiziert werden kann. Dieser Testmodus kann beim Einschalten des Motors initiiert werden. Dabei kann die Spannung und/oder die Frequenz der Treiberpulse solange erhöht werden, bis eine vom bewegten Rotor erzeugte rückinduzierte Spannung meßbar ist.

Besonders vorteilhaft läßt sich das Verfahren bei Motoren mit mindestens zwei und vorteilhafterweise drei Wicklungen anwenden. Dabei werden die Wicklungen entsprechend der vorgesehenen Drehrichtung mit Treiberpulsen beaufschlagt, wobei eine Pulsdauer ausreichend lang ist, um den Rotor über das Magnetfeld zu beschleunigen und bis zum Stillstand abzubremsen.

Besonders vorteilhaft lassen sich Kreiselpumpen, die mit dem erfindungsgemäßen Verfahren angesteuert werden, im Kühlsystem von Kraftfahrzeugen einsetzen. Gerade bei diesem Einsatz als Umwälzpumpe reichen mitunter sehr geringe Pumpleistungen aus, um die nötigen Mengen an Kühlflüssigkeit zu fördern.

Eine besondere Ausführungsform des erfindungsgemäßen Verfahrens wird im folgenden anhand der Zeichnungen näher erklärt.

Bei der folgenden Beschreibung wird die Regelung derartiger elektronisch kommutierter Gleichstrommotoren als bekannt vorausgesetzt. Diese Motoren haben beispielsweise einen achtpoligen Permanentmagnetrotor, dessen drei Wicklungen in Dreieckschaltung verschaltet sind. Die Kommutierung erfolgt mittels eines Kontrolers in der Form eines Mikroprozessors, der in diesem Falle sechs Leistungstransistoren ansteuert und dadurch die Wicklungen der Reihe nach bestromt. Die Drehung des Rotors induziert in den Wicklungen elektromotorische Gegenkräfte (BEMF), die an den Phasen gemessen werden können und die die Stellung des Rotors kennzeichnen.

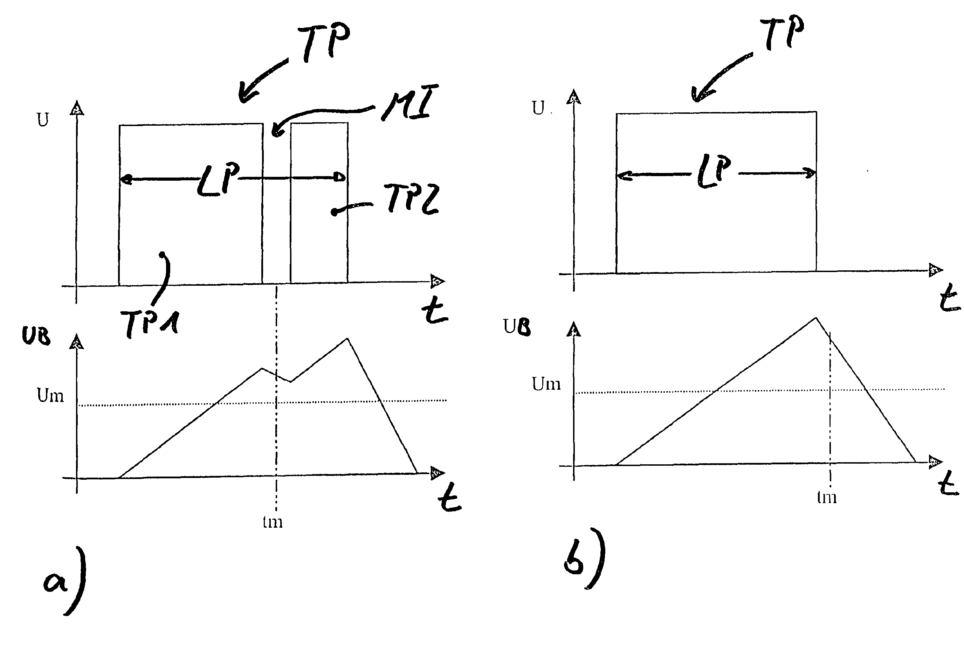

Mit dem erfindungsgemäßen Verfahren wird der Motor zum Antrieb einer Kreiselpumpe derart in einem Schrittbetrieb angesteuert, daß eine Vollkreisdrehung des Rotors von einer Abfolge unterscheidbarer Einzelschritte gebildet wird. Dazu wird der Rotor durch Einschalten eines Statorfeldes in Form eines rechteckigen Treiberpulses TP der Spannung Us beschleunigt und vor der Kommutierung des Statorfeldes bis zum Stillstand abgebremst. Mögliche Formen eines Treiberpulses sind in der Figur ersichtlich, wobei in der oberen Hälfte der Schaubilder a) und b) der Verlauf der Spannung U gegen die Zeit t aufgetragen ist. In den unteren Abschnitten der Schaubilder a) und b) ist der Verlauf der jeweils meßbaren BEMF als Spannung UB gegen die Zeit aufgetragen.

In der Figur Teil a) ist ein Treiberpuls TP der Länge LP gezeigt, der zur Zeit tm für ein kurzes Meßintervall MI aussetzt. Der Verlauf der BEMF steigt entsprechend im ersten Pulsabschnitt TP1 kontinuierlich an, um im Meßintervall MI kurzzeitig abzufallen und im Pulsabschnitt TP2 wieder zum Maximalwert anzusteigen. Die elektronische Steuerung mißt die BEMF, die über einer für die Elektronik meßbaren Schwellenspannung Um liegt, zum Zeitpunkt tm. Im Teil b) der Zeichnung ist ein kontinuierlicher Treiberpuls der Länge LP gezeigt und die BEMF wird von der Elektronik nach dem Ende des Pulses TP zum Zeitpunkt tm gemessen.

## Patentansprüche

1. Verfahren zum Betrieb eines elektronischen kommutierten Gleichstrommotors zum Antrieb einer Kreiselpumpe, der einen Stator mit mindestens einer Wicklung und der einen permanentmagnetischen Rotor aufweist, **gekennzeichnet durch** einen kontrollierten Schrittbetrieb, in dem eine Vollkreisdrehung des Rotors von einer Abfolge unterscheidbarer Einzelschritte gebildet wird, wobei der Rotor **durch** Einschalten eines Statorfeldes beschleunigt wird und vor der Kommutierung des Statorfeldes abgebremst wird.

2. Verfahren nach Anspruch 1,
**dadurch gekennzeichnet, daß** der Rotor vor der Kommutierung des Statorfeldes zum Stillstand abgebremst wird.

3. Verfahren nach Anspruch 1 oder 2,
**dadurch gekennzeichnet, daß** das Statorfeld durch Anlegen eines Treiberpulses an eine Wicklungsphase erzeugt wird, wobei der Treiberpuls eine vorgebbare Pulsdauer und eine vorgebbare Spannung hat.

4. Verfahren nach Anspruch 3,
**dadurch gekennzeichnet, daß** der Treiberpuls rechteckig ist.

5. Verfahren nach Anspruch 3 oder 4,
**dadurch gekennzeichnet, daß** der Treiberpuls für ein kurzes Meßintervall abgeschaltet wird und innerhalb des Meßintervalls die rückinduzierte Spannung in einer Wicklungsphase gemessen wird, wobei die Länge des Intervalles kleiner als ¼ der Pulsdauer ist.

6. Verfahren nach einem der vorherigen Ansprüche,
**dadurch gekennzeichnet, daß** die rückinduzierte Spannung in einer Wicklungsphase im spannungslosen Intervall zwischen zwei Treiberpulsen gemessen wird.

7. Verfahren nach einem der vorherigen Ansprüche,
**dadurch gekennzeichnet, daß** der Motor drei Wicklungen aufweist, die entsprechend der vorgesehenen Drehrichtung mit Treiberpulsen beaufschlagt werden, wobei eine Pulsdauer ausreichend lang ist, um den Rotor über das Magnetfeld zu beschleunigen und bis zum Stillstand abzubremsen.

8. Verfahren nach einem der vorherigen Ansprüche,
**dadurch gekennzeichnet, daß** während der Messung der rückinduzierten Spannung an keiner Wicklung Spannung anliegt.

9. Verfahren nach einem der vorherigen Ansprüche, **gekennzeichnet durch** einen Testmodus zur Diagnose einer möglichen Blockierung des Rotors, wobei die Spannung und/oder die Frequenz der Treiberpulse erhöht wird, bis eine vom bewegten Rotor erzeugte rückinduzierte Spannung meßbar ist.

10. Bürstenloser Gleichstrommotor zum Antrieb einer Kreiselpumpe, der einen permanentmagnetischen Rotor und einen Stator mit insbesondere drei Wicklungen aufweist und der im Bereich von Drehzahlen kleiner als 400 Umdrehungen pro Minute mit dem Verfahren nach den vorherigen Ansprüchen betrieben wird.

11. Verwendung einer mit einem bürstenlosen Gleichstrommotor betriebenen Kreiselpumpe nach Anspruch 10 als Umwälzpumpe im Kühlkreislauf eines Kraftfahrzeuges.

## Claims

1. Method for operating an electronically commutated DC motor for driving a centrifugal pump, which has a stator with at least one winding and which has a permanent magnet rotor, **characterised by** controlled step operation, in which a turn of the rotor full circle is formed by a succession of various individual steps, in which the rotor is accelerated by switching on a stator field and decelerated before commutating the stator field.

2. Method according to claim 1,
**characterised in that** the rotor is decelerated to a standstill before commutating the stator field.

3. Method according to claim 1 or 2,
**characterised in that** the stator field is produced by applying a driving pulse to a winding phase, in which the driving pulse has a pulse duration, which can be preset, and a voltage, which can be preset.

4. Method according to claim 3,
**characterised in that** the driving pulse is rectangular.

5. Method according to claim 3 or 4,
**characterised in that** the driving pulse is switched off for a short measuring interval and the reinduced voltage is measured in a winding phase within the measuring interval, **in that** the length of the interval is smaller than ¼ of the pulse duration.

6. Method according to one of the previous claims, **characterised in that** the reinduced voltage is measured in a winding phase in the interval without voltage between two driving pulses.

7. Method according to one of the previous claims, **characterised in that** the motor has three windings, which are subjected to driving pulses according to the direction of rotation provided, in which a pulse duration is long enough to accelerate the rotor through the magnetic field and decelerate it to a standstill.

8. Method according to one of the previous claims, **characterised in that** no voltage is applied to any winding during the measurement of the reinduced voltage.

9. Method according to one of the previous claims, **characterised by** a test method for diagnosing possible locking of the rotor, in which the voltage and/or the frequency of the driving pulse is increased, until a reinduced voltage can be measured, which is produced by the rotor being moved.

10. Brushless DC motor for driving a centrifugal pump, which has a permanent magnet rotor and a stator with three windings in particular and which is driven with the method according to the previous claims in the speed range of less than 400 rpm.

11. Use of a centrifugal pump operated with a brushless DC motor according to claim 10 as a circulating pump in the cooling circuit of a motor vehicle.

## Revendications

1. Procédé permettant le fonctionnement d'un moteur à courant continu commuté par voie électronique, destiné à actionner une pompe centrifuge, qui présente un stator avec au moins un bobinage et un rotor de type aimant permanent, **caractérisé en ce qu'**il présente un fonctionnement pas à pas contrôlé, dans lequel une rotation décrivant un cercle entier du rotor est constituée d'une succession de pas individuels pouvant être différenciés, moyennant quoi le rotor est accéléré par la mise en place d'un champ de stator et ralenti avant la commutation du champ du stator.

2. Procédé selon la revendication 1, **caractérisé en ce que** le rotor est ralenti avant la commutation du champ de stator afin de parvenir à l'arrêt.

3. Procédé selon la revendication 1 ou 2, **caractérisé en ce que** le champ de stator est produit en établissant une impulsion d'attaque sur une phase de bobinage, moyennant quoi l'impulsion d'attaque a une durée d'impulsion pouvant être prédéfinie et une tension pouvant être prédéfinie.

4. Procédé selon la revendication 3, **caractérisé en ce que** l'impulsion d'attaque est rectangulaire.

5. Procédé selon la revendication 3 ou 4, **caractérisé en ce que** l'impulsion d'attaque est interrompue durant un intervalle de mesure court, et on mesure à l'intérieur de l'intervalle de mesure la tension induite par réaction dans une phase de bobinage, moyennant quoi la longueur de l'intervalle est inférieure à ¼ de la durée d'impulsion.

6. Procédé selon l'une quelconque des revendications précédentes, **caractérisé en ce que** la tension induite par réaction dans une phase de bobinage est mesurée entre deux impulsions d'attaque dans un intervalle sans tension.

7. Procédé selon l'une quelconque des revendications précédentes, **caractérisé en ce que** le moteur présente trois bobinages, qui sont sollicités en fonction du sens de rotation prévu avec les impulsions d'attaque, moyennant quoi une durée d'impulsion est suffisamment longue pour accélérer le rotor par l'intermédiaire du champ magnétique et le ralentir jusqu'à l'arrêt.

8. Procédé selon l'une quelconque des revendications précédentes, **caractérisé en ce que**, pendant la mesure de la tension induite par réaction, sur aucun bobinage, il n'existe une tension.

9. Procédé selon l'une quelconque des revendications précédentes, **caractérisé par** un mode d'essai permettant de diagnostiquer un blocage possible du rotor, moyennant quoi la tension et/ou la fréquence des impulsions d'attaque est accrue jusqu'à ce qu'une tension induite par réaction, produite par le rotor amené à se déplacer, puisse être mesurée.

10. Moteur à courant continu sans balai permettant d'entraîner une pompe centrifuge, qui présente un rotor de type aimant permanent et un stator avec en particulier trois bobinages, et qui est actionné, dans la plage de vitesses de rotation inférieure à 400 tours par minute, grâce au procédé selon l'une quelconque des revendications précédentes.

11. Utilisation d'une pompe centrifuge actionnée par un moteur à courant continu sans balai selon la revendication 10, sous la forme d'une pompe de recirculation dans le circuit de refroidissement d'un véhicule automobile.
